# EUROPÄISCHE PATENTANMELDUNG

(11) **EP 1 465 279 A1**
(43) Veröffentlichungstag der Anmeldung: **06.10.2004**
(21) Anmeldenummer: 03005902.6
(22) Anmeldetag: 15.03.2003
(51) Int. Cl.: H01M 10/04, G06K 19/077

(54) **Folienbatterie als Kartenkörper einer Chipkarte**

(71) Anmelder: Orga Kartensysteme GmbH, 33104 Paderborn (DE)
(72) Erfinder: Osterwald, Frank, 24103 Kiel (DE); König, Karl-Heinz, 22149 Hamburg (DE)

(57) **Zusammenfassung**

Die Erfindung betrifft eine Folienbatterie 1 die kartenförmig im wesentlichen in Form einer Chipkarte ausgebildet ist und die eine Kavität 2 zur Aufnahme eines Chipkarten-Moduls aufweist.

## Beschreibung

Die Erfindung betrifft das Gebiet der Chipkarten und zwar insbesondere das Gebiet der Chipkarten-Körper und der Folienbatterien.

Aus dem Stand der Technik ist die Verwendung von Folienbatterien für die Spannungsversorgung von Chipkarten an sich bekannt. Solche Folienbatterien werden auch als Flachbatterien bezeichnet. Solche Batterien sind beispielsweise von der Firma Microbatterie GmbH, D-73479 Ellwangen, Deutschland kommerziell erhältlich.

Von der Firma E. C. R. -Electro-Chemical Research, Ltd. 76117 Rehovot, NL, wird weiter eine ultradünne, schichtweise aufgebaute Batterie für Chipkarten angeboten, die als RHISS-Batterie bekannt ist (RHISS=rechargeable hydrogen ion solid state electrolyte). Die RHISS-Batterie ist zwischen 0,35 und 0,70 mm dünn, wird in einem Batteriepack isoliert und in die Chipkarte eingesetzt, um dort mit den Leiterbahnen der Chipkarte verbunden zu werden.

Aus der DE 199 33 757 A1 ist eine Chipkarte mit einer integrierten Batterie bekannt. Anstelle der Integration einer vorgefertigten Folien- oder Flachbatterie wird hier die Fertigung der Batterie in den Herstellungsprozess der Chipkarte integriert.

Die Spannungsversorgung einer Chipkarte mittels einer in die Chipkarte integrierten Folienbatterie ist insbesondere für Anwendungen vorteilhaft, die nicht das Einführen der Chipkarte in einen Terminal vorsehen. Beispiele für solche Anwendungen sind die sogenannte Geldkarte mit Display zur Anzeige des auf der Karte noch verfügbaren Geldbetrags. Von besonderer Bedeutung ist die Integration einer Folienbatterie auch für sogenannte Super Smart Cards, sowie sogenannter System on Card Anwendungen, worunter man eine Chipkarte mit integrierten aufwendigen Kartenelementen versteht.

Eine weitere Anwendung ist für sogenannte Dual-Interface-Karten gegeben. Hierunter versteht man eine Chipkarte mit kontaktbehafteter und kontaktloser Schnittstelle für die Datenübertragung von und zur Karte. Die Folienbatterie kann zur Spannungsversorgung der Karte für den kontaktlosen Fall dienen. Ebenso kann eine Folienbatterie für die Spannungsversorgung einer Chipkarte, welche lediglich über eine kontaktlose Schnittstelle verfügt, eingesetzt werden.

Beispiele für entsprechende Chipkartenanwendungen sind unter anderem bekannt aus DE 199 40 561 C1, EP 0 989 514 A2, DE 199 13 093 C2, DE 199 10 768 A1.

Aus der DE 199 45 708 A1 ist eine Chipkarte bekannt, welche eine Kernfolie und zwei Deckfolien, Mitteln zur kontaktlosen und / oder kontaktbehafteten Datenübertragung, einen Halbleiterchip und ein weiteres elektronisches Bauelement, einen Kondensator sowie Leiterbahnen zur elektrischen Kontaktierung der Komponenten umfasst. Der Kondensator wird durch zwei sich teilweise überlappende und im Überlappungsbereich durch ein Dielektrikum voneinander getrennte Leiterbahnen gebildet, die durch Siebdruck eines UV-härtbaren Materials auf der Kernfolie hergestellt sind.

Nachteilig bei Chipkarten-Anwendungen mit einer in die Chipkarte integrierten Folienbatterie ist, dass die Batteriekapazität für viele Anwendungen zu gering ist bzw. die Batterie nur eine relativ kurze Lebensdauer hat. Darüber hinaus ist auch die Integration einer Folienbatterie in den Chipkartenkörper problematisch.

Der Erfindung liegt die Aufgabe zu Grunde, eine verbesserte Folienbatterie zur Verwendung in einer Chipkarte, sowie eine entsprechende verbesserte Chipkarte und ein Verfahren zur Herstellung einer Chipkarte zu schaffen.

Die der Erfindung zu Grunde liegende Aufgabe wird mit den Merkmalen der unabhängigen Patentansprüche jeweils gelöst. Bevorzugte Ausführungsbeispiele der Erfindung sind in den abhängigen Patentansprüchen angegeben.

Nach der Lehre der Erfindung wird der Kartenkörper einer Chipkarte im wesentlichen durch eine Folienbatterie oder eine Flachbatterie selbst gebildet. Die Begriffe "Folienbatterie" und "Flachbatterie" werden im weiteren synonym verwendet.

Die Verwendung einer Folienbatterie als Chipkartenkörper hat insbesondere den Vorteil, dass damit eine sehr große Batteriekapazität zur Verfügung gestellt wird, ohne die Dicke einer üblichen Chipkarte zu überschreiten. Dadurch werden Chipkarten-Anwendungen ermöglicht, die besonders viel Energie benötigen.

Nach einer bevorzugten Ausführungsform der Erfindung hat die Folienbatterie mehrere Batteriezellen, die miteinander verschaltet sind, um eine für die betreffende Anwendung erforderliche Spannung und / oder einen erforderlichen Strom zur Verfügung zu stellen.

Nach einer weiteren bevorzugten Ausführungsform der Erfindung wird die Folienbatterie mit einer Haftvermittlerschicht bedruckt, um sogenannte Artworks auf die Chipkarte aufzubringen. Alternativ oder zusätzlich kann dies auch durch das Aufbringen von bedruckbaren oder bedruckten Schichten erfolgen.

Nach einer weiteren bevorzugten Ausführungsform der Erfindung sind in der Kavität der Folienbatterie Kontaktelemente vorgesehen, die zur Kontaktierung mit dem Chipkarten-Modul dienen. In diesem Fall kann die Kontaktierung des Chipkarten-Moduls mit der Folienbatterie im gleichen Prozessschritt wie die Implantation des Chipkarten-Moduls in die Kavität der Folienbatterie erfolgen. Vorzugsweise wird das Chipkarten-Modul in der Kavität der Folienbatterie unter Verwendung eines Klebstoffs, insbesondere eines anisotrop leitfähigen Klebstoffs, mechanisch fixiert und elektrisch mit den Kontaktelementen kontaktiert.

Nach einer weiteren bevorzugten Ausführungsform der Erfindung sind die Kontaktelemente in der Kavität der Folienbatterie auf gegenüberliegenden Seiten in der Kavität angeordnet und zwar derart, dass sich die Kontaktelemente und entsprechende Kontakte des Chipkarten-Moduls jeweils gegenüberstehen.

Nach einer weiteren bevorzugten Ausführungsform der Erfindung befindet sich ein Batteriepol der Folienbatterie an der Oberseite und der andere Pol der Folienbatterie an der Unterseite. Wenn die Kavität der Folienbatterie nach oben offen ist, um das Einsetzten eines Chipkarten-Moduls zu ermöglichen, ist das Kontaktelement für den Batteriepol an der Unterseite über eine Leiterbahn mit dem unteren Batteriepol verbunden. Andere Anordnungen der Kontakte sind beliebig wählbar.

Nach einer weiteren bevorzugten Ausführungsform der Erfindung sind die Batteriepole der Folienbatterie außen mit einem isolierenden Material beschichtet. Auf diese Art und Weise werden Kurzschlüsse zwischen den Batteriepolen verhindert, beispielsweise beim Greifen der Karte durch einen Benutzer. Dabei hat es sich als besonders zweckmäßig herausgestellt, dass die Schicht aus isolierendem Material die gleiche ist, die auch das Drucken der Karte ermöglicht.

Nach einer weiteren bevorzugten Ausführungsform der Erfindung sind weitere an sich aus der Chipkarten-Technik bekannte Sicherheitsmerkmale oder andere Merkmale, sogenannte add-ons, mit in die Chipkarte integriert, und zwar durch eine entsprechende Gestaltung der Beschichtung der Folienbatterie mit einer Deckschicht. Hierfür ist zum Beispiel eine Beschichtung aus laserfähigen Material bzw. eine thermo-transfer bedruckbare Oberfläche geeignet. Ebenso ist die zusätzliche Integration von Magnetstreifen, Hologrammen und dergleichen möglich.

Der zur Verfügung stehende Platz für die Batterien gestattet auch die Unterteilung der Batterie in mehrere nebeneinander oder übereinander liegende Zellen und deren Schaltung entweder in Reihe oder in Serie. Damit lassen sich die Leerlaufspannungen und Kurzschlussströme der Batterie vorteilhaft an die jeweilige Applikation anpassen.

Die Folienbatterie kann entweder als Sekundär- oder als Primär-Batterie gestaltet sein. Die Aufladung einer Sekundär-Batterie kann induktiv über eine Antenne erfolgen, welche durch Ätzen oder durch andere Strukturierungsschritte z.B. aus der Kupfermetallisierung der Anode geformt ist.

Die Erfindung erlaubt es ferner, eine Metallisierungsschicht oder mehrere Metallisierungsschichten, die zumeist ohnehin in einer Folienbatterie vorhanden sind, für die Integration von einem oder mehren Bauelementen zu nutzen. Diese Bauelemente können dann von dem Modul der Chipkarte über die zumeist ohnehin an der Folienbatterie angeordneten Kontaktelemente und / oder über gesonderte Kontakte angesteuert werden.

Ein besonderer Vorteil der Erfindung ist darin zu sehen, dass die sonst im Stand der Technik erforderlichen, aufwendigen und kostspieligen Prozessschritte sowie Materialien für die Realisierung von Bauelementen, wie z. B. Antennen und Kondensatoren, eingespart werden können. Insbesondere entfällt der technische Aufwand für die gesonderte Integration einer Folienbatterie und der weiteren Bauelemente in den Chipkartenkörper.

Dies wird erfindungsgemäß dadurch erreicht, dass die in einer Folienbatterie ohnehin vorhandene Metallisierungsschicht bzw. mehrere der Metallisierungsschichten für die Integration von Bauelementen genutzt werden. Dadurch reduziert sich der Aufwand bei der Herstellung der Chipkarte auf die Integration der Batterie in den Chipkartenkörper, da in der Batterie die weiteren Bauelemente integriert sind, und somit eine gesonderte Integration der weiteren Bauelemente entfällt.

Nach einer bevorzugten Ausführungsform der Erfindung kommt eine Folienbatterie zum Einsatz, die eine innere Schicht aufweist, die im Wesentlichen den Elektrolyten beispielsweise in gebundener Form als Elektrolytpaste enthält. Die Anode und die Kathode der Folienbatterie werden durch äußere Kupferschichten gebildet, die jeweils ganzflächig auf den beiden Seiten der Batterie aufgebracht sind.

Statt Kupfer kann dabei auch beispielsweise Aluminium zum Einsatz kommen. Generell ist jedoch die Erfindung nicht auf einen bestimmten Folienbatterietyp beschränkt, sondern sie kann für alle Folienbatterietypen eingesetzt werden, bei denen zumindest eine Metallisierungsschicht vorhanden ist.

Nach einer bevorzugten Ausführungsform der Erfindung wird diejenige Metallisierungsschicht, die die Anode oder die Kathode der Folienbatterie bildet, für die Integration des Bauelements genutzt. Für die Integration einer Antenne, einer Spule oder eines elektrischen Widerstands ist nur eine Metallisierungsschicht erforderlich, während für die Integration, beispielsweise eines Kondensators, zwei Metallisierungsschichten benötigt werden.

Nach einer weiteren bevorzugten Ausführungsform der Erfindung handelt es sich bei der Metallisierungsschicht nicht unmittelbar um die Anode oder die Kathode, sondern eine Kontaktierungsschicht zur Herstellung einer elektrischen Verbindung mit der Anode oder der Kathode. Eine solche Metallisierungsschicht befindet sich oft in oder an einem Außenbereich der Folienbatterie, beispielsweise für die Kontaktierung der Folienbatterie nach außen, sowie auch für die Kapselung der Folienbatterie gegen äußere mechanische Einflüsse, sowie auch die Kapselung gegen Feuchtigkeit.

Nach einer weiteren bevorzugten Ausführungsform der Erfindung sind zwei Metallisierungsschichten in der Folienbatterie vorhanden, die jeweils ein Kontaktelement zum Anschluss an das Modul der Chipkarte aufweisen, um das Modul mit Spannung zu versorgen. Zumindest eines dieser Kontaktelemente wird neben der Spannungsversorgung auch für die Kontaktierung zwischen dem Modul und dem in der Folienbatterie integrierten Bauelement genutzt. Alternativ sind gesonderte Leitungsverbindungen zu dem Bauelement vorhanden, um eine Kontaktierung mit dem Modul herzustellen. Auch diese gesonderten Leitungsverbindungen sind dabei vorzugsweise in der Metallisierungsschicht der Folienbatterie integriert oder auf diese aufgebracht.

Nach einer weiteren bevorzugten Ausführungsform der Erfindung handelt es sich bei dem Bauelement um eine Antenne. Eine Antennenstruktur wird dazu auf oder in einer der Metallisierungsschichten z. B. durch Ätzen, Stanzen oder durch Aufbringung einer gewickelten Spule mit oder ohne Trägerfolie integriert.

Die Antenne kann dabei mit der Metallisierungsschicht elektrisch verbunden sein. In diesem Fall kann das Kontaktelement der Metallisierungsschicht für die Ansteuerung der Antenne bzw. den Empfang von Antennensignalen in dem Modul verwendet werden. Wenn eine solche Kontaktierung der Antenne mit der Metallisierungsschicht nicht gegeben ist, wird eine elektrische Verbindung zwischen dem Modul und der Antenne durch eine gesonderte Leitungsverbindung hergestellt.

Nach einer weiteren bevorzugten Ausführungsform der Erfindung werden die Folienbatterie und die in die Folienbatterie integrierte Antenne in Serie geschaltet, so dass die Kontaktierung von Batterie und Antenne über das entsprechende Kontaktelement der betreffenden Metallisierungsschicht hergestellt werden kann. Ein solches Kontaktelement kann auch als Batterie-Kontaktfahne ausgeführt sein. Alternativ erfolgt eine gesonderte Beschaltung von Antenne und Batterie, insbesondere dann, wenn der integrierte Schaltkreis des Moduls der Chipkarte dies erforderlich macht.

Die Nutzung einer Batterie-Kontaktfahne sowohl für die Spannungsversorgung als auch für die Kontaktierung eines Bauelements, beispielsweise der Antenne, ist möglich, da die Versorgungs- und Signal-Ströme unterschiedliche Frequenzen aufweisen. Bei den Versorgungsströmen handelt es sich im Wesentlichen um Gleichstrom und bei den Signal-Strömen um Wechselströme, die von der Antenne empfangen und / oder übertragen werden.

Nach einer weiteren bevorzugten Ausführungsform der Erfindung ist in die Folienbatterie ein Kondensator integriert. Hierzu werden zwei gegenübliegende Metallisierungsschichten der Folienbatterie verwendet. Ferner kann in einer der Metallisierungsschichten eine Spule integriert werden. Die Spule und der Kondensator können dann durch eine ebenfalls in der Folienbatterie integrierte Leitungsverbindung kontaktiert werden, um einen Schwingkreis zu schaffen.

Nach einer weiteren bevorzugten Ausführungsform der Erfindung ist ein elektrischer Widerstand in einer Metallisierungsschicht der Folienbatterie integriert. Hierzu wird ein Teilbereich der Metallisierungsschicht von der umgebenden Metallisierungsschicht z. B. durch Ätzen oder Stanzen abgetrennt. Dieser abgetrennte Teilbereich bildet dann einen elektrischen Widerstand einer definierten Größe.

Die Erfindung ist insbesondere für Chipkartenanwendungen von Vorteil, die eine relativ große Folienbatterie erfordern, um besondere Bedienfunktionen zu ermöglichen und die entsprechenden Bauelemente, wie z. B. Tastatur, Display, biometrische Sensoren, Kryptospeicherchips, Multifunktions-Controller und andere Einheiten mit Spannung zu versorgen. Vorzugsweise werden dabei auch die für die Realisierung dieser weiteren Funktionen erforderlichen Bauelemente ganz oder teilweise mit in die Folienbatterie, das heißt, in eine oder mehrere der Metallisierungsschichten der Folienbatterie, integriert. Hierdurch ist insbesondere auch ein sogenanntes "System on Card" realisierbar.

Nach einer bevorzugten Ausführungsform der Erfindung wird das betreffende Bauelement in der Metallisierungsschicht durch einen Ätz- oder einen Stanzschritt realisiert. Alternativ wird das gewünschte Bauelement auf die Metallisierungsschicht aufgebracht und dabei mit der Metallisierungsschicht elektrisch verbunden oder gegenüber der Metallisierungsschicht, beispielsweise durch eine Trägerfolie oder eine Isolations- und / oder Klebeschicht, elektrisch isoliert.

Nach einer weiteren bevorzugten Ausführungsform der Erfindung wird die Folienbatterie so hergestellt, dass zumindest eine der Metallisierungsschichten verlängert ausgebildet ist, so dass die betreffende Metallisierungsschicht über den Rand der Folienbatterie hinausragt. In diesen über den Rand der Folienbatterie hinausragenden Bereich wird dann das gewünschte Bauelement integriert. Dann wird der vorstehende Bereich entlang einer Knicklinie um z.B. 180° geknickt, so dass das Bauelement auf der Metallisierungsschicht oder einer auf der Metallisierungsschicht befindlichen Isolations- oder Klebeschicht zum Aufliegen kommt.

Nach einer weiteren bevorzugten Ausführungsform der Erfindung wird eine Isolationsschicht der Folienbatterie zur Integration von einem oder mehreren elektrischen oder elektronischen Bauelementen verwendet. Eine solche Isolationsschicht ist zumeist in einer Folienbatterie ohnehin vorhanden, um die Batteriepole voneinander elektrisch zu isolieren. Beispielsweise können auf einer solchen Isolationsschicht ein oder mehrere Windungen einer Antenne aufgebracht werden. Diese Windungen sind nach einer bevorzugten Ausführungsform der Erfindung um einen Batteriepol umlaufend ausgebildet.

Zur Herstellung eines Bauelements auf der Isolationsfolie kann ein überstehendes Metallisierungsstück eines der Batteriepole verwendet werden. Dieses kann beispielsweise mittels Stanzen oder mittels eines Ätzschritts bearbeitet werden, um die gewünschte Leiterbahngeometrie auf der Isolationsschicht herzustellen.

Nach einer weiteren bevorzugten Ausführungsform der Erfindung ist die Isolationsschicht der Folienbatterie über den Rand der Batteriepole hinaus verlängert ausgebildet.

Dadurch wird zusätzlicher Raum für die Integration von Bauelementen auf der Isolationsschicht gewonnen.

Nach einer weiteren bevorzugten Ausführungsform der Erfindung ist die auf der Isolationsschicht realisierte Antenne mit der Folienbatterie in Reihe geschaltet, so dass keine sonst erforderliche zusätzliche Antennenbrücke benötigt wird. Die befriedigende Realisierung einer solchen zusätzlichen Antennenbrücke in anderen Schaltungsstrukturen stellt ein im Stand der Technik an sich ungelöstes Problem dar.

Im weiteren werden bevorzugte Ausführungsbeispiele der Erfindung mit Bezugnahme auf die Zeichnungen näher erläutert. Es zeigen:
- Figur 1: eine Ausführungsform einer erfindungsgemäßen Folienbatterie mit einer Kavität zur Aufnahme eines Chipkarten-Moduls,
- Figur 2: einen Querschnitt durch die Folienbatterie der Figur 1,
- Figur 3: ein schematisches Schichtdiagramm einer Ausführungsform einer erfindungsgemäßen Folienbatterie,
- Figur 4: ein Schichtdiagramm einer weiteren bevorzugten Ausführungsform einer erfindungsgemäßen Folienbatterie während des Herstellungsvorgangs,
- Figur 5: eine Draufsicht auf eine Ausführungsform einer erfindungsgemäßen Folienbatterie mit integrierten Bauelementen,
- Figur 6: ein Ersatzschaltbild einer Serienschaltung einer in eine Folienbatterie integrierten Antenne
- Figur 7: ein Ersatzschaltbild für einen in eine Folienbatterie integrierten Kondensator.

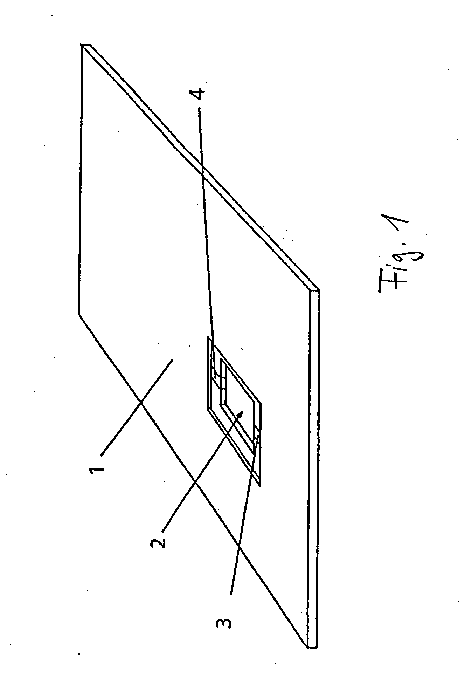

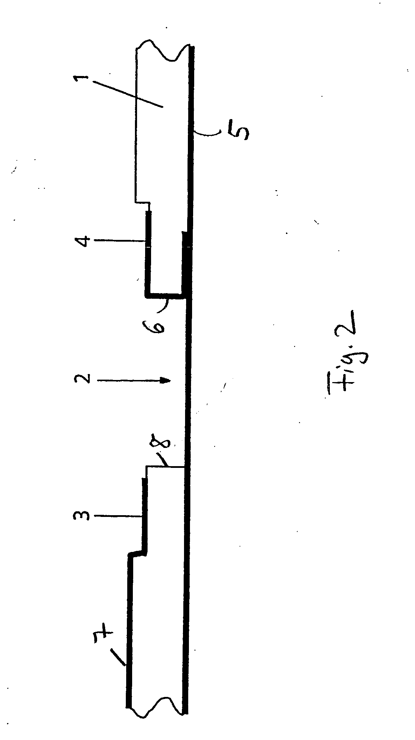

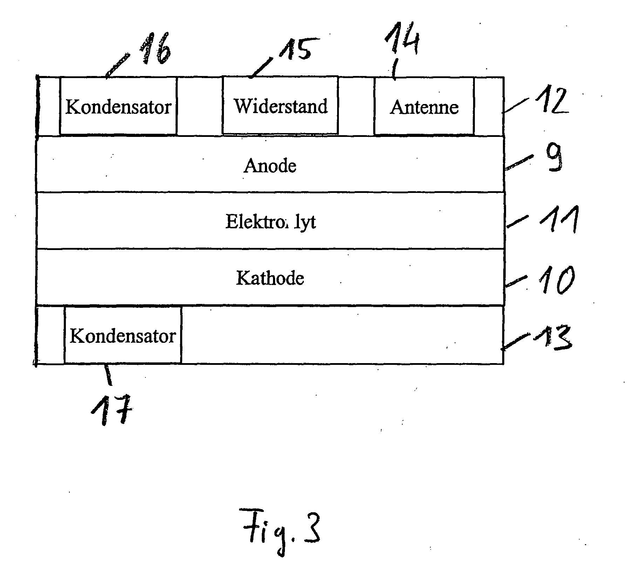

Die Figur 1 zeigt eine Folienbatterie 1, die im Wesentlichen die Form einer Chipkarte aufweist, das heißt, beispielsweise im Wesentlichen einem Chipkarten-Format entspricht. Standardisierte Chipkarten-Formate sind in der internationalen Norm ISO 7810 festgelegt; übliche Formate sind das ID-1, ID-00 und das ID-000 Format (vgl. "Handbuch der Chipkarten", 3. Auflage, Wolfgang Rankl, Wolfang Effing, Kapitel 3.1.1).

Die Folienbatterie 1 kann in sämtlichen ihren äußeren Abmessungen dem gewählten Chipkarten-Format entsprechen. Alternativ kann die Folienbatterie 1 auch in einer oder mehrerer ihrer Dimensionen etwas kleiner ausgestaltet sein, als es das gewählte Chipkarten-Format vorschreibt, um noch eine Beschichtung oder dergleichen auf die Oberfläche der Folienbatterie 1 aufzubringen.

Die Folienbatterie 1 hat eine Kavität 2, das heißt eine Ausnehmung zur Aufnahme eines Chipkarten-Moduls. Vorzugsweise weist die Kavität 2 eine Form auf, wie sie von üblichen Chipkarten her bekannt ist (vgl. "Handbuch der Chipkarten", Seite 571). Die Herstellung der Kavität 2 in der Folienbatterie 1 hängt von dem verwendeten Folienbatterie-Typ ab. Bei Verwendung eines Feststoffs als Elektrolyten kann die Kavität, das heißt die Modulaussparung in der Folienbatterie 1, durch eine mechanische Bearbeitung, wie z. B. durch Fräsen realisiert werden.

Die Folienbatterie 1 hat einen flächigen oberen Batteriepol und einen flächigen unteren Batteriepol an ihrer Unterseite. In der Kavität 2 befindet sich ein Kontaktelement 3 zur Kontaktierung des oberen Batteriepols, sowie ein Kontaktelement 4 zur Kontaktierung des unteren Batteriepols. Die Kontaktelemente 3 und 4 sind dabei an gegenüberliegenden Seiten der Kavität 2 angeordnet, so dass ein Chipkarten-Modul in die Kavität 2 eingesetzt werden kann, um dort elektrische Kontakte mit den Kontaktelementen 3 und 4 zu bilden. Das Chipkarten-Modul verfügt über Kontakte für die Folienbatterie 1.

Die Figur 2 zeigt die Folienbatterie 1 der Figur 1 im Querschnitt. Das Kontaktelement 4 ist mit dem unteren Batteriepol 5 über eine Leiterbahn 6 verbunden, um einen elektrischen Kontakt zwischen dem Kontaktelement 4 und dem unteren Batteriepol 5 herzustellen. Das Kontaktelement 3 ist unmittelbar mit dem oberen Batteriepol 7 der Folienbatterie 1 kontaktiert.

Je nach dem verwendeten Batterietyp kann es erforderlich sein, eine Versiegelung der Kante 8 in der Kavität 2 vorzunehmen, um zum Beispiel das Auslaufen von Elektrolyten zu verhindern. Bei der Verwendung von einem Feststoff als Elektrolyten kann auf die Versiegelung der Kante 8 im Allgemeinen verzichtet werden.

In die Kavität 2 der Folienbatterie 1 wird ein Chipkarten-Modul implantiert. Dies kann unter Verwendung eines anisotrop leitfähigen Klebstoffes erfolgen, wobei die Leitfähigkeit des Klebstoffs in vertikale Richtung gegeben ist, um elektrische Verbindungen mit den Kontaktelementen 3 und 4 herzustellen. Durch das Implantieren des Chipkarten-Moduls in die Folienbatterie 1 erhält man eine funktionsfähige Chipkarte.

Bei der Chipkarte kann es sich um jeden beliebigen Chipkartentyp handeln, wie z. B. um eine Speicherchipkarte, eine intelligente Speicherchipkarte mit einer logischen Schaltung, eine Prozessorchipkarte, eine Smart Card, eine Super Smart Card oder ein System on Card.

Vorzugsweise befindet sich die Kavität 2 an einer räumlichen Position in der Folienbatterie, die durch die Norm ISO 7816-1,2 gegeben ist. Wenn sich das Chipkarten-Modul in einer solchen normgerechten Position befindet, wird es beim Einführung in einen Terminal elektrisch kontaktiert und mit Spannung versorgt.

Es gibt jedoch auch Anwendungen für Chipkarten außerhalb eines solchen Terminals, wozu die Spannungsversorgung des Chipkarten-Moduls 34 über die Folienbatterie 1 erforderlich ist. Für solche Anwendungen kann die Chipkarte weitere Elemente aufweisen, wie zum Beispiel eine Tastatur, ein Display und eine Antenne, die vorzugsweise in einer Metallisierungsschicht der Folienbatterie 1 integriert sind.

Die Figur 3 zeigt eine schematische Darstellung der einzelnen Schichten der Folienbatterie 1 (vgl. Figur 1) im Querschnitt. Die Folienbatterie 1 hat eine Anode 9 und eine Kathode 10, zwischen denen sich ein Elektrolyt 11 befindet. Bei dem Elektrolyt 11 handelt es sich vorzugsweise um einen pastenförmigen oder festen Elektrolyt.

Die Folienbatterie 1 hat ferner eine obere Metallisierungsschicht 12 zur Kontaktierung der Anode 9. In einem Endbereich der Metallisierungsschicht 12 befindet sich das Kontaktelement 3.

Entsprechend hat die Folienbatterie 1 eine untere Metallisierungsschicht 13 zur Kontaktierung der Kathode 10. An einem Endbereich weist die Metallisierungsschicht 13 das Kontaktelement 4 auf.

In dem gezeigten Anwendungsfall der Figur 3 ist in der oberen Metallisierungsschicht 12 eine Antenne 14 integriert. Die Antenne 14 kann in der Metallisierungsschicht 12 durch einen Ätz- oder einen Stanzvorgang ausgebildet werden. Alternativ kann die Antenne 14 auch durch Aufbringen, z. B. Aufkleben eines Antennenelements auf die Metallisierungsschicht 12 integriert werden. Die Integration der Antenne 14 kann dabei so erfolgen, dass eine elektrische Verbindung zwischen der Antenne 14 und der Metallisierungsschicht 12 hergestellt wird. In diesem Fall kann die Antenne 14 über das Kontaktelement 3 und / oder 4 von dem in dem Chipkarten-Modul befindlichen integrierten Schaltkreis angesteuert werden.

Entsprechend ist in der Metallisierungsschicht 12 ein elektrischer Widerstand 15 integriert. Auch der Widerstand 15 kann durch einen Ätz- oder einen Stanzschritt sowie durch Aufkleben eines Widerstandelements auf die Metallisierungsschicht 12 integriert werden.

Des Weiteren ist in der Metallisierungsschicht 12 eine Kondensatorelektrode 16 integriert. In der Metallisierungsschicht 13 ist eine entsprechende Kondensatorelektrode 17 integriert. Durch die Kondensatorelektroden 16 und 17 ist ein Kondensator gebildet, der über gesonderte Leitungen, die in der Figur 3 der Übersichtlichkeit halber nicht dargestellt sind, von dem integrierten Schaltkreis des Chipkarten-Moduls angesteuert oder mit diesem verschaltet werden kann.

Alternativ zu der Ausführungsfbrm der Figur 3 kann auch auf die Metallisierungsschichten 12 und 13 der Folienbatterie 1 verzichtet werden, indem die Anode 9 und die Kathode 10 unmittelbar auch als Kontaktierungsschichten mit entsprechenden Kontaktelementen ausgebildet werden. Die Bauelemente, das heißt, die Antenne 14, der Widerstand 15 und die Kondensatorelektroden 16, 17 werden dann in die Metallisierungsschicht der Anode 9 bzw. der Kathode 10 integriert.

Auch bei der in der Figur 3 gezeigten Ausführungsform ist es nicht zwingend, die genannten Bauelemente in den Metallisierungsschichten 12 und 13 zu integrieren. Alternativ oder zusätzlich können auch die genannten oder weitere Bauelemente in den Metallisierungsschichten der Anode 9 und / oder der Kathode 10 integriert werden.

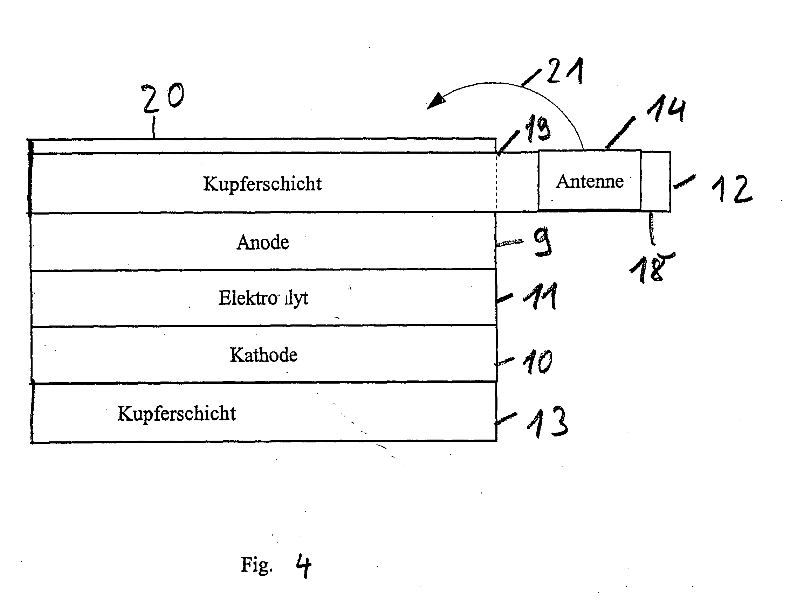

Die Figur 4 zeigt ein weiteres Ausführungsbeispiel einer Folienbatterie 1 während des Herstellungsvorgangs. Elemente der Figur 4 die Elementen der Figur 3 entsprechen, sind mit denselben Bezugszeichen gekennzeichnet.

Die Metallisierungsschichten 12 und 13 bestehen in der Ausführungsform der Figur 4 aus Kupfer. Die Metallisierungsschicht 12 ist über die Begrenzung der Folienbatterie 1 hinaus verlängert ausgeführt. In dem entsprechenden Bereich 18 der Metallisierungsschicht 12, der über die Berandung der Folienbatterie 1 hervorsteht, ist eine Antenne 14 integriert. Der Bereich 18 ist durch eine Knicklinie 19 in Richtung auf den Rand der Folienbatterie 1 begrenzt.

Auf der Metallisierungsschicht 12 befmdet sich eine Schicht 20, die zur Isolation dient und / oder als Klebeschicht ausgebildet ist. Der Bereich 18 wird entlang der Pfeilrichtung 21 um die Knicklinie 19 um einen Winkel von ca. 180 ° gedreht, bis die Antenne 14 auf der Schicht 20 der Metallisierungsschicht 12 aufliegt. Wenn die Schicht 20 als Klebeschicht ausgebildet ist, wird die Antenne 14 hierdurch gleichzeitig fixiert.

Bei der Knickbewegung entlang der Knicklinie 19 kann diese aufgebrochen werden, so dass die Antenne 14 gegenüber der Metallisierungsschicht 12 isoliert wird. Eine elektrische Verbindung kann dann über die Schicht 20 hergestellt werden, wenn diese nicht als Isolationsschicht sondern als elektrisch leitfähige Schicht ausgebildet ist.

Alternativ kann die Metallisierungsschicht 12 bei der Knickbewegung elektrisch intakt bleiben, so dass auch nach der Knickbewegung eine unmittelbare elektrische Verbindung der Antenne 14 mit der Metallisierungsschicht 12 gegeben ist.

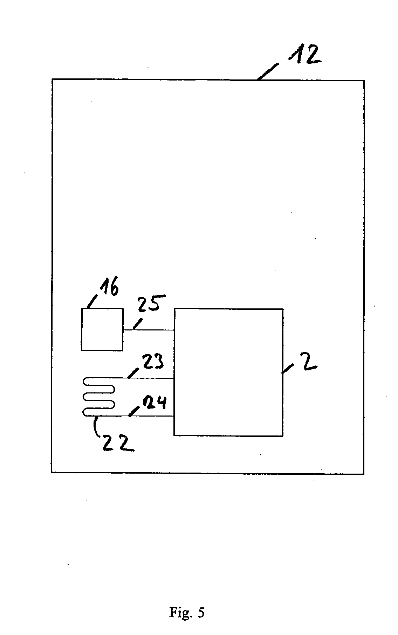

Die Figur 5 zeigt eine Draufsicht auf eine erfindungsgemäße Chipkarte mit einem in der Kavität 2 implantierten Chipkarten-Modul. Elemente der Figur 5, die Elementen der Figuren 1, 2, 3 und 4 entsprechen, sind wiederum mit denselben Bezugszeichen gekennzeichnet.

In dem Ausführungsbeispiel der Figur 5 ist in der Metallisierungsschicht 12 eine Spule 22 integriert. Ferner sind in der Metallisierungsschicht 12 die Leiterbahnen 23 und 24 zur Kontaktierung der Spule 22 integriert. Diese Leiterbahnen 23 und 24 ragen über die Berandung der Folienbatterie 1 zum Anschluss an das Modul hinaus. Die Leiterbahnen 23 und 24 sind dabei z.B. durch einen Ätz- oder Stanzvorgang der Metallisierungsschicht 12 realisiert. Alternativ können die Leiterbahnen 23 und 24 auch durch eine Isolationsschicht von der Metallisierungsschicht 12 getrennt auf die Metallisierungsschicht 12 aufgebracht werden.

Entsprechen ist auch die Kondensatorelektrode 16 über eine Leiterbahn 25 kontaktierbar.

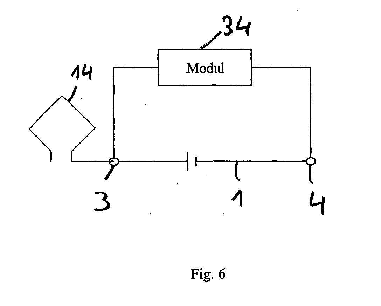

Die Figur 6 zeigt ein Ersatzschaltbild betreffend die in die Metallisierungsschicht 12 integrierte Antenne 14, für den Fall, dass die Antenne 14 mit der Metallisierungsschicht 12 elektrisch verbunden ist. Durch die Folienbatterie 1 ist ein Zweipol mit den durch die Kontaktelemente 3 und 4 gebildeten Pole realisiert. An diese beiden Pole ist das Chipkarten-Modul 34 anschließbar. Dadurch wird das Chipkarten-Modul 34 mit Spannung versorgt. Ferner kann der in dem Chipkarten-Modul 34 befindliche integrierte Schaltkreis über die Kontaktelement 3 die Antenne 14 ansteuern bzw. von der Antenne 14 Signale empfangen.

Ebenso ist es möglich die Antenne 14 als Zweipol zu betreiben, indem die beiden Anschlüsse der Antenne 14 mit den Kontaktelementen 3 bzw. 4 verbunden werden.

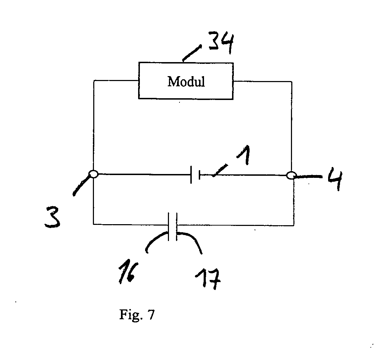

Die Figur 7 zeigt ein entsprechendes Ersatzschaltbild bezüglich der Integration des Kondensators in die Folienbatterie 1. Der Kondensator wird dabei durch die Kondensatorelektroden 16 und 17 gebildet (vgl. Figur 3). Auch hier ist wiederum ein Zweipol mit den Kontaktelementen 3 und 4 als Anschlüsse gegeben. Das Chipkarten-Modul 34 wird über diese Kontaktelementen 3 und 4 einerseits mit Spannung versorgt und kontaktiert darüber hinaus den durch die Kondensatorelektroden 16 und 17 gebildeten Kondensator für die Zwecke der in dem Chipkarten-Modul 34 angeordneten elektronischen Schaltung.

### Bezugszeichenliste

- Folienbatterie: 1
- Kavität: 2
- Kontaktelement: 3
- Kontaktelement: 4
- unterer Batteriepol: 5
- Leiterbahn: 6
- oberer Batteriepol: 7
- Kante: 8
- Anode: 9
- Kathode: 10
- Elektrolyt: 11
- Metallisierungsschicht: 12
- Metallisierungsschicht: 13
- Antenne: 14
- Widerstand: 15
- Kondensatorelektrode: 16
- Kondensatorelektrode: 17
- Bereich: 18
- Knicklinie: 19
- Schicht: 20
- Pfeilrichtung: 21
- Spule: 22
- Leiterbahnen: 23
- Leiterbahnen: 24
- Leiterbahnen: 25
- Modul: 34

## Patentansprüche

1. Folienbatterie **dadurch gekennzeichnet, dass** die Folienbatterie (1) kartenförmig im Wesentlichen in Form einer Chipkarte ausgebildet ist und eine Kavität (2) zur Aufnahme eines Chipkarten-Moduls aufweist.

2. Folienbatterie nach Anspruch 1, wobei die Folienbatterie mehrere Batteriezellen aufweist, die miteinander verschaltet sind.

3. Folienbatterie nach Anspruch 1 oder 2, wobei in der Kavität ein erstes Kontaktelement (3) zur Kontaktierung eines ersten Batteriepols (7) und ein zweites Kontaktelement (4) zur Kontaktierung eines zweiten Batteriepols (5) angeordnet sind.

4. Folienbatterie nach Anspruch 3, wobei das erste Kontaktelement und das zweite Kontaktelement auf einer Oberseite der Folienbatterie angeordnet sind und mit einer elektrischen Verbindung (6) zur Herstellung eines elektrischen Kontakts zwischen dem zweiten Kontaktelement und dem an der Unterseite der Folienbatterie befindlichen zweiten Batteriepol.

5. Folienbatterie nach einem der vorhergehenden Ansprüche 1 bis 4 mit einer auf die Oberfläche der Folienbatterie aufgebrachte Haftvermittlerschicht und / oder mit einer auf der Oberfläche befindlichen bedruckbaren oder bedruckten Schicht.

6. Folienbatterie nach einem der vorhergehenden Ansprüche 1 bis 5, wobei die Folienbatterie (3) eine Metallisierungsschicht (9, 10, 12, 13) und / oder eine Isolationsschicht aufweist, und auf oder in der Metallisierungsschicht und / oder der Isoaltionsschicht zumindest ein elektrisches, elektronisches und / oder mikromechanisches Bauelement integriert ist und das Bauelement an ein Modul (34) der Chipkarte anschließbar ist.

7. Folienbatterie nach Anspruch 6, bei der es sich bei der Metallisierungsschicht um eine Anode (9) oder um eine Kathode (10) handelt.

8. Folienbatterie nach Anspruch 6, bei der es sich bei der Metallisierungsschicht um eine Kontaktierungsschicht (12, 13) zur Herstellung einer elektrischen Verbindung mit einer Anode oder einer Kathode handelt.

9. Folienbatterie nach Anspruch 6, bei der es sich bei der Metallisierungsschicht um eine zusätzliche Metallisierungsschicht der Folienbatterie handelt.

10. Folienbatterie nach einem der vorhergehenden Ansprüche 6 bis 9, bei der es sich bei der Isolationsschicht um eine Schicht zur Isolation der Batteriepole der Folienbatterie handelt.

11. Folienbatterie nach einem der vorhergehenden Ansprüche 6 bis 10, bei der die Metallisierungsschicht erste und zweite Kontaktelemente (3, 4) für eine Spannungsversorgung des Moduls aufweist, und das erste und / oder das zweite Kontaktelement für eine Kontaktierung des Bauelements mit dem Modul verwendet wird.

12. Folienbatterie nach einem der vorhergehenden Ansprüche 6 bis 11, bei der es sich bei dem Bauelement um eine Antenne (14) oder um eine Spule (22) handelt.

13. Folienbatterie nach Anspruch 12, bei der die Antenne mit der Metallisierungsschicht elektrisch verbunden ist und über eines der Kontaktelemente von dem Modul ansteuerbar ist.

14. Folienbatterie nach Anspruch 12, bei der die Antenne oder die Spule von der Metallisierungsschicht elektrisch isoliert ist und über eine gesonderte Leitungsverbindung (23, 24) von dem Modul ansteuerbar ist, wobei die Leitungsverbindung vorzugsweise in der Metallisierungsschicht integriert ist oder auf der Metallisierungsschicht aufgebracht ist.

15. Folienbatterie nach einem der vorhergehenden Ansprüche 6 bis 14, bei der das Bauelement als Kondensator ausgebildet ist und eine erste Kondensatorelektrode (16) des Kondensators in der ersten Metallisierungsschicht (12) integriert ist und eine zweite Kondensatorelektrode (17) in einer zweiten Metallisierungsschicht (13) integriert ist und der Kondensator über je eine gesonderte Leitungsverbindung (25) mit dem Modul verbindbar ist, wobei die Leitungsverbindungen vorzugsweise in die Metallisierungsschichten integriert sind oder auf diese aufgebracht sind.

16. Folienbatterie nach einem der vorhergehenden Ansprüche 6 bis 15, bei der es sich bei dem Bauelement um einen elektrischen Widerstand (15) handelt und der elektrische Widerstand durch einen abgetrennten Teilbereich der Metallisierungsschicht gebildet wird, wobei der Widerstand vorzugsweise über zwei gesonderte Leitungsverbindungen mit dem Modul verbindbar ist und die Leitungsverbindungen vorzugsweise in die Metallisierungsschicht integriert sind oder auf diese aufgebracht sind.

17. Folienbatterie nach einem der vorhergehenden Ansprüche 6 bis 16, bei der das Bauelement in oder auf einer gegenüber der Metallisierungsschicht isolierenden Schicht (20) angeordnet ist.

18. Chipkarte mit einem Chipkarten-Modul (34) und mit einer Folienbatterie (1) nach einem der vorhergehenden Ansprüche 1 bis 17, wobei das Modul in der Kavität (2) der Folienbatterie angeordnet ist.

19. Chipkarte nach Anspruch 18, wobei das Chipkarten-Modul in der Kavität der Folienbatterie mittels eines anisotrop leitfähigen Klebstoffes mechanisch fixiert und elektrisch kontaktiert ist.

20. Verwendung einer Folienbatterie als Kartenkörper einer Chipkarte.

21. Verfahren zur Herstellung einer Chipkarte mit folgenden Schritten:
- Herstellung einer Folienbatterie nach einem der vorhergehenden Ansprüche 1 bis 17,
- Implantation eines Chipkarten-Moduls in die Kavität der Folienbatterie.

22. Verfahren zur Herstellung einer Chipkarte nach Anspruch 21 mit folgenden weiteren Schritten:
- Herstellung der Folienbatterie mit einer Metallisierungsschicht und / oder einer Isolationsschicht, wobei die Metallisierungsschicht und / oder die Isolationsschicht einen Bereich zur Integration eines elektrischen, elektronischen und / oder mikromechanischen Bauelements aufweist,
- Integration des Bauelements auf oder in der Metallisierungsschicht und / oder der Isolationsschicht.

23. Verfahren nach Anspruch 22 mit folgenden weiteren Schritten:
- Herstellung einer Folienbatterie mit einer Metallisierungsschicht, wobei die Metallisierungsschicht einen Bereich zur Integration eines elektrischen oder elektronischen Bauelements aufweist, und der Bereich eine Knicklinie an dessen Rand aufweist,
- Aufbringung einer Isolationsschicht auf die Metallisierungsschicht,
- Knicken des Bereichs entlang der Knicklinie bis das Bauelement auf der Isolationsschicht aufliegt.

24. Verfahren nach Anspruch 22, wobei die Isolationsschicht als Klebeschicht ausgebildet ist, so dass das Bauelement, nachdem es auf der Klebeschicht aufliegt, durch die Klebeschicht fixiert wird.
